# EUROPÄISCHE PATENTSCHRIFT

(11) **EP 2 882 513 B1**
(45) Veröffentlichungstag und Bekanntmachung des Hinweises auf die Patenterteilung: **14.03.2018**
(21) Anmeldenummer: 13739183.5
(22) Anmeldetag: 11.07.2013
(51) Int. Cl.: B01D 53/14, C07C 7/11

(54) **VERFAHREN ZUR REGENERATION EINER FÜR EINE GASWÄSCHE VORGESEHENEN UND MIT AROMATISCHEN KOHLENWASSERSTOFFEN ANGEREICHERTEN WASCHFLÜSSIGKEIT SOWIE REGENERATIONSANORDNUNG**
PROCESS FOR REGENERATING A SCRUBBING LIQUID WHICH IS PROVIDED FOR A GAS SCRUB AND IS ENRICHED IN AROMATIC HYCROCARBONS AND ALSO REGENERATION ARRANGEMENT
PROCÉDÉ DE RÉGÉNÉRATION D'UN LIQUIDE DE LAVAGE PRÉVU POUR UN LAVAGE DE GAZ ET ENRICHI EN HYDROCARBURES AROMATIQUES, AINSI QUE DISPOSITIF DE RÉGÉNÉRATION

(30) Priorität: 09.08.2012 DE 102012107333
(43) Veröffentlichungstag der Anmeldung: 17.06.2015
(73) Patentinhaber: ThyssenKrupp Industrial Solutions AG, 45143 Essen (DE)
(72) Erfinder: RICHTER, Diethmar, 44379 Dortmund (DE); THIELERT, Holger, 44379 Dortmund (DE)
(74) Vertreter: Duda, Rafael Thomas
(86) Internationale Anmeldenummer: PCT/EP2013/064715
(87) Internationale Veröffentlichungsnummer: WO 2014/023507

(56) Entgegenhaltungen:
- WO-A1-2009/003644
- US-A- 4 198 378
- US-A1- 2009 158 930
- US-A1- 2011 120 315
- US-B1- 6 800 120

## Beschreibung

Die Erfindung betrifft ein Verfahren zur Regeneration einer für eine Gaswäsche vorgesehenen und mit aromatischen Kohlenwasserstoffen angereicherten Waschflüssigkeit in einer Regenerationskolonne. Bei Nutz- und Abgasen besteht häufig das Erfordernis, Verunreinigungen und störende Bestandteile des Gases zu entfernen, um die Reinheit des Gases zu erhöhen, Umweltbelastungen zu vermeiden oder Schmutzablagerungen zu verhindern. Darüber hinaus können aus einem Prozessgas oder Abgas herausgewaschene Substanzen zum Teil auch einer stofflichen Nutzung zugeführt werden, weshalb auch die wirtschaftlichen Aspekte einer Gaswäsche zu berücksichtigen sind.

Beispielsweise werden bei der Verkokung von Kohle aromatische Kohlenwasserstoffe als Bestandteil des entstehenden Kokereigases freigesetzt. Um die aromatischen Kohlenwasserstoffe einer weiteren Verwertung zuführen zu können und nicht an die Umgebung abzugeben, werden diese bei der Aufbereitung des Kokereigases zumeist nach der Abscheidung von Teer und Ammoniak aus dem Kokereigas herausgewaschen. Als Waschflüssigkeit wird in der Praxis ein Waschöl auf der Basis einer Teerölfraktion verwendet, welche durch die Verarbeitung von Steinkohle erzeugt wird. Entsprechend der hauptsächlich enthaltenen aromatischen Kohlenwasserstoffe Benzol, Toluol, m-, p-, o-Xylol und Ethylbenzol wird dieser Verfahrensschritt allgemein auch als BTEX-Wäsche, BTX-Wäsche oder Benzol-Wäsche bezeichnet. Die genannten aromatischen Kohlenwasserstoffe werden gemeinsam auch als Rohbenzol bezeichnet, wobei der Anteil von Rohbenzol abhängig von der für den Verkokungsprozess eingesetzten Kohle und der Prozessführung typischerweise zwischen 20 und 40 Gramm pro Normalkubikmeter (Nm³) beträgt. Das Rohbenzol weist typischerweise zwischen 55 bis 75 % Benzol, 13 bis 19 % Toluol und zwischen 5 bis 10% Xylole auf. Zusätzlich enthält das Kokereigas auch multizyklische aromatische Kohlenwasserstoffe, wie insbesondere Naphthalin, welche in einem gewissen Maße von dem Waschöl aufgenommen werden können. Ferner enthält das Kokereigas Verunreinigungen, insbesondere H₂S, HCN, NH₃ sowie organische Schwefelverbindungen. Eine typische Zusammensetzung eines Kokereigases weist beispielsweise auf:
54 bis 62 Volumen-%H₂
23 bis 28 Volumen-%CH₄
6,2 bis 8 Volumen-% CO
H₂S ca. 7g/Nm³
HCN ca. 1,5 g/Nm³
NH₃ 7g/Nm³
S_{ORG} ca. 0,5 g/Nm³
BTX bis 40 g/Nm³
Naphthalin bis 2 g/Nm³

Die Verfahren zur BTEX-Wäsche werden in ihren Grundzügen seit Jahrzehnten unverändert eingesetzt und sind beispielsweise in dem Fachbuch O. Grosskinsky, "Handbuch des Kokereiwesens", Band 2, Auflage 1958, Seiten 137 ff. beschrieben. Die BTEX-Wäsche erfolgt in einem oder mehreren hintereinander angeordneten Wäschern, wobei zur Absorption der aromatischen Kohlenwasserstoffe durch das Waschöl ein inniger Kontakt zwischen dem Kokereigas und dem Waschöl als Waschflüssigkeit gewährleistet werden muss. Ein inniger Kontakt kann einerseits durch eine feine Zerstäubung des Waschöls und andererseits durch dünne Ölfilme erreicht werden.

Besonders vorteilhaft ist die Kombination einer Berieselungseinrichtung einerseits und von Horden, Füllkörpern oder sonstigen Einbauten andererseits, wobei die aus der Berieselungsanlage kommenden Öltröpfchen zu einem Ölfilm mit möglichst großer Oberfläche ausgebreitet werden. Die Löslichkeit von Benzol, Toluol und Xylol ist insbesondere von dem Dampfdruck der verschiedenen Komponenten abhängig, weshalb das Waschöl bei vergleichsweise niedrigen Temperaturen dem Wäscher zugeführt wird.

Andererseits muss das Waschöl auch eine ausreichende Fließfähigkeit und geringe Viskosität aufweisen, damit es gut zu verteilen ist und eine große Oberfläche bilden kann. Das mit aromatischen Kohlenwasserstoffen angereicherte Waschöl, welches sich am Boden des Wäschers sammelt, wird abgezogen, wobei das Rohbenzol nachfolgend bei erhöhter Temperatur durch Strippen mit Wasserdampf aus dem Waschöl abgetrieben wird. Das Waschöl wird dann nach Abkühlung wieder dem Wäscher zugeführt. Um bei einem möglichst großen Durchsatz an Kokereigas eine weitgehende Auswaschung von Rohbenzol zu erreichen, wird das Waschöl mit einem Überschuss dem Wäscher zugegeben. Um bei den in modernen Kokereien anfallenden Mengen an Kokereigas die BTEX-Wäsche durchführen zu können, sind große Mengen an Waschöl erforderlich.

Um die Absorption von aromatischen Kohlenwasserstoffen aus Kokereigas im Rahmen einer BTEX-Wäsche zu verbessern, wird gemäß der WO 2009/003 644 A1 der Einsatz von Biodiesel als Waschflüssigkeit vorgeschlagen. Der Begriff "Biodiesel" bezieht sich auf einen organischen Kraftstoff, der im Gegensatz zu fossilem Dieselöl nicht aus fossilem Rohöl, sondern aus Pflanzenölen durch Umesterung gewonnen wird.

Überraschenderweise stellt Biodiesel eine hocheffiziente Waschflüssigkeit dar, mit der die aromatischen Kohlenwasserstoffe Benzol, Toluol, m-, p-, o-Xylol und Ethylbenzol entfernt werden können. Biodiesel ist zusätzlich kostengünstig, problemlos handhabbar und zeichnet sich auch durch eine verbesserte CO₂-Bilanz aus.

Zusätzlich zu der Absorption der BTEX-Komponenten wird auch der Anteil des multizyklischen aromatischen Kohlenwasserstoffes Naphthalin deutlich reduziert. Bei einem Verfahren gemäß der WO 2009/003 644 A1 kann die Naphthalin-Konzentration ausgehend von einem Anteil von typischerweise bis zu 2 g/Nm³ (Gramm pro Normalkubikmeter) bei üblichen Prozessparametern auf eine Konzentration von 100 bis 150 mg/Nm³ (Milligramm pro Normalkubikmeter) reduziert werden. Unter vergleichbaren Betriebsparametern ergeben sich bei einer konventionellen Waschflüssigkeit, welche auf Mineralöl oder Teeröl basiert, deutlich höhere Werte im Bereich zwischen 200 und 300 mg/Nm³, da diese bereits im frischen Zustand eine erhebliche Restkonzentration von Naphthalin aufweisen.

Die vorliegende Erfindung beschäftigt sich mit der Aufgabe, ein verbessertes Verfahren zur Regeneration einer für eine Gaswäsche vorgesehenen und mit aromatischen Kohlenwasserstoffen angereicherten Waschflüssigkeit anzugeben, um eine effizientere Gaswäsche zu ermöglichen. Darüber hinaus sollen Regenerationsanordnungen angegeben werden, welche die Durchführung des erfindungsgemäßen Verfahrens ermöglichen.

Gegenstand der Erfindung und Lösung der Aufgabe sind ein Verfahren gemäß Patentanspruch 1 sowie Vorrichtungen gemäß der nebengeordneten Ansprüche 12 und 13. Nach dem erfindungsgemäßen Verfahren zur Regeneration einer für eine Gaswäsche vorgesehenen und mit aromatischen Kohlenwasserstoffen angereicherten Waschflüssigkeit wird die mit aromatischen Kohlenwasserstoffen angereicherte Waschflüssigkeit zunächst in einer ersten Regenerationsstufe der Regenerationskolonne mit Wasserdampf in Kontakt gebracht, wodurch die aromatischen Kohlenwasserstoffe teilweise aus der Waschflüssigkeit entfernt werden. Die in der ersten Regenerationsstufe gereinigte Waschflüssigkeit wird dann in einen ersten Mengenstrom und einen zweiten Mengenstrom aufgeteilt, wobei der zweite Mengenstrom als gereinigte Waschflüssigkeit für eine Gaswäsche abgeführt wird. Die Handhabung des zweiten Mengenstroms entspricht im Wesentlichen dem aus dem Stand der Technik bekannten Verfahren. Die Waschflüssigkeit wird in der ersten Regenerationsstufe soweit gereinigt, dass diese wieder für eine effektive Auswaschung aromatischer Kohlenwasserstoffe, insbesondere für eine BTEX-Wäsche, geeignet ist.

Aufgrund der physikalischen Gleichgewichte während der Regeneration verbleiben auch in der gereinigten Waschflüssigkeit stets Reste aromatischer Kohlenwasserstoffe. In der ersten Regenerationsstufe wird aber ein Großteil der verschiedenen aromatischen Kohlenwasserstoffe soweit entfernt, dass diese Verunreinigungen nachfolgend wieder effektiv mit der Waschflüssigkeit aus einem Abgas oder Prozessgas, beispielsweise Kokereigas, entfernt werden können.

Der Erfindung liegt vor diesem Hintergrund aber die Erkenntnis zugrunde, dass mit lediglich einer Regenerationsstufe die Entfernung einzelner aromatischer Wasserstoffkomponenten jedoch unzureichend sein kann. So können beispielsweise bei der Reinigung von Kokereigas die BTEX-Komponenten Benzol, Toluol m-, p-, o-Xylol und Ethylbenzol bereits in der ersten Regenerationsstufe weitestgehend entfernt werden, während der Gehalt des multizyklischen aromatischen Kohlenwasserstoffes Naphthalin vergleichsweise hoch bleibt. Bei den bekannten Verfahren zur Reinigung von Kokereigas besteht deshalb das Bedürfnis, den Naphthalingehalt weiter zu reduzieren. Zusätzlich zu den gesundheitsschädlichen und umweltgefährlichen Eigenschaften von Naphthalin kann dieses auch in dem der BTEX-Wäsche nachgelagerten Rohrleitungssystem Ablagerungen bilden, wodurch die entsprechenden Leitungen verschmutzt werden oder sich sogar zusetzen können.

Um eine weitere Komponente, also insbesondere Naphthalin, mit einer besseren Effizienz entfernen zu können, lehrt die vorliegende Erfindung die Aufteilung der Waschflüssigkeit in den ersten und den zweiten Mengenstrom, wobei der erste Mengenstrom zur weiteren Regeneration einer zweiten Regenerationsstufe der Regenerationskolonne zugeführt wird, in der durch Kontakt mit Wasserdampf die Konzentration von aromatischen Wasserstoffen gegenüber der Konzentration in dem zweiten Mengenstrom weiter reduziert wird. Dazu wird erfindungsgemäß ein Strom von Wasserdampf eingesetzt, der zunächst durch die zweite und nachfolgend durch die erste Regenerationsstufe geleitet wird. Vorzugsweise wird der gesamte für den Regenerationsprozess vorgesehene Wasserdampf zunächst durch die zweite und nachfolgend durch die erste Regenerationsstufe geleitet. Durch die weitere Regeneration in der zweiten Regenerationsstufe wird mit dem ersten Mengenstrom eine stärker abgetriebene Waschflüssigkeit bereitgestellt, welche im besonderen Maße für eine Feinwäsche eines Prozess- oder Abgases eingesetzt werden kann, aus dem bereits zuvor aromatische Kohlenwasserstoffe in einem gewissen Maße entfernt wurden.

Wesentlicher Bestandteil der vorliegenden Erfindung ist die Aufteilung der in der ersten Regenerationsstufe gereinigten Waschflüssigkeit in den ersten Mengenstrom und den zweiten Mengenstrom, wobei der zweite Mengenstrom üblicherweise größer ist als der erste Mengenstrom. Der dann den Hauptbestandteil der gereinigten Waschflüssigkeit darstellende zweite Mengenstrom ist für eine effiziente Entfernung der BTEX-Komponenten geeignet. Lediglich der üblicherweise kleinere Anteil des ersten Mengenstroms wird einer zusätzlichen Regeneration zugeführt, um dann im Rahmen einer mehrstufigen Gaswäsche zuvor nicht ausreichend entfernte Reste, beispielsweise Naphthalin, entfernen zu können. Der aus der zweiten Regenerationsstufe abgezogene, stark abgetriebene Mengenstrom kann auch als ultra reinesöl (ultra lean oil) bezeichnet werden.

Da in der zweiten Regenerationsstufe lediglich eine Teilmenge des in der ersten Regenerationsstufe regenierten Waschmittels mit dem Wasserdampf in Kontakt gebracht wird, der Wasserdampf noch seine maximale Temperatur aufweist und der Anteil an aromatischen Kohlenwasserstoffen zuvor in der Gaswäscherstufe bereits reduziert wurde, können in der zweiten Regenerationsstufe noch verbleibende Reste aromatischer Kohlenwasserstoffe, beispielsweise Naphthalin, effektiv entfernt werden.

Zur Durchführung des erfindungsgemäßen Verfahrens kommen verschiedene Waschflüssigkeiten in Form von Waschölen in Betracht. Neben konventionellen Waschflüssigkeiten, welche auf Mineralöl oder Teeröl basieren, kommt insbesondere auch Biodiesel als Waschflüssigkeit in Betracht. Bezüglich der konventionellen Waschflüssigkeiten ist zu berücksichtigen, dass diese bereits im frischen Zustand eine erhebliche Restkonzentration von aromatischen Kohlenwasserstoffen, insbesondere Naphthalin, aufweisen können. Durch die erfindungsgemäß vorgesehene zweistufige Regeneration des ersten Mengenstromes des Waschflüssigkeit ist auch eine Entfernung des ursprünglich in der frischen Waschflüssigkeit enthaltenen Naphthalins möglich, so dass durch den Waschprozess im Rahmen der Erfindung sogar eine Teilmenge der Waschflüssigkeit in Form des ersten Mengenstromes bereitgestellt werden kann, welche in ihrer Reinheit die frische Waschflüssigkeit übertrifft. Wenn also in dem laufenden Verfahren frische Waschflüssigkeit auf der Basis von Mineralöl oder Teeröl zugeführt wird, wird dieses zunächst durch das im Kreislauf geführte Waschöl verdünnt, wobei auch das ursprünglich in der zugeführten Waschflüssigkeit enthaltene Naphthalin sukzessive entfernt wird, wenn die Waschflüssigkeit als erster Mengenstrom durch die zweite Regenerationsstufe geführt wird.

Bei dem zur Regeneration zugeführten Wasserdampf handelt es sich vorzugsweise um einen überhitzten Wasserdampf mit einer Temperatur von mehr als 150 °C. Nach dem Durchlaufen der ersten Regenerationsstufe weist eine zuvor für die BTEX-Wäsche eingesetzte Waschflüssigkeit nur noch geringe Anteile an BTEX-Komponenten auf. Der zweite Mengenstrom kann deshalb ohne eine weitere Behandlung oder Veränderung der Waschflüssigkeit erneut für die BTEX-Wäsche eingesetzt werden, wobei jedoch üblicherweise noch die dafür geeignete Temperatur einzustellen ist.

Die Aufteilung der in der ersten Regenerationsstufe gereinigten Waschflüssigkeit kann sowohl innerhalb als auch außerhalb der Regenerationskolonne erfolgen.

Gemäß einer ersten Variante des erfindungsgemäßen Verfahrens wird die gesamte in der ersten Regenerationsstufe gereinigte Waschflüssigkeit in einem Sumpf der ersten Regenerationsstufe gesammelt, in ein Leitungssystem geleitet und in dem Leitungssystem in den ersten und den zweiten Mengenstrom aufgeteilt. Das Leitungssystem weist dazu zweckmäßigerweise eine Pumpe und eine zu der zweiten Regenerationsstufe führende Abzweigung auf, durch die der erste Mengenstrom geführt wird. Der üblicherweise größere zweite Mengenstrom kann im Rahmen der Erfindung füllstandsgeregelt und nach einer Kühlung erneut der BTEX-Wäsche zugeführt werden.

Besonders bevorzugt wird der üblicherweise kleinere erste Mengenstrom durch die Pumpe, beispielsweise einer Heißölpumpe, mit einem Druck beaufschlagt und über einen Sprühverteiler in die zweite Regenerationsstufe eingesprüht. Auch bei einer geringen Durchsatzmenge wird die Querschnittsfläche der zweiten Regenerationsstufe durch das Versprühen optimal genutzt, so dass eine gleichmäßige Verteilung und damit eine effiziente Ausnutzung des Querschnittes der zweiten Regenerationsstufe sowie der darin üblicherweise vorgesehenen Einbauten in Form von Packungen möglich ist. Durch den Kontakt mit dem zugeführten Wasserdampf, ist eine effektive Abtrennung von verbleibenden Kohlenwasserstoff-Komponenten, insbesondere Naphthalin, möglich. Vorzugsweise wird der gesamte zur Regeneration vorgesehene Wasserdampf zunächst durch die zweite Regenerationsstufe und sodann durch die erste Regenerationsstufe geleitet. Grundsätzlich ist aber nicht ausgeschlossen, dass eine Teilmenge des Wasserdampfes erst zwischen der zweiten und der ersten Regenerationsstufe aufgegeben wird.

Der in der zweiten Regenerationsstufe stark abgetriebene erste Mengenstrom wird vorzugsweise füllstandsgeregelt aus einem unteren Kolonnensumpf der Regenerationskolonne über eine Pumpe abgezogen und für die Gaswäsche bereitgestellt. Wie bereits zuvor erläutert, ist der stark abgetriebene erste Mengenstrom insbesondere im Rahmen einer mehrstufigen Gaswäsche für eine nachgelagerte Feinwäsche geeignet.

Im Rahmen der beschriebenen Variante des Verfahrens, bei der die gesamte Waschflüssigkeit nach der ersten Regenerationsstufe aufgefangen und abgeführt wird, ist an der ersten Regenerationsstufe eine Füllstandsregelung möglich, so dass Prozessschwankungen eliminiert werden können, wodurch auch die Gefahr einer Sicherheitsabschaltung im Betrieb vermieden wird. Da die gesamte Waschflüssigkeit zunächst in das Leitungssystem überführt wird, kann der erste Mengenstrom auch leicht mit einem Druck beaufschlagt und dann versprüht werden, wodurch sich eine effektive Ausnutzung des Querschnittes der zweiten Regenerationsstufe und insbesondere einer zur Verfügung gestellten Packungsoberfläche ergibt.

Gemäß einer alternativen Variante des erfindungsgemäßen Verfahrens erfolgt eine Aufteilung der in der ersten Regenerationsstufe gereinigten Waschflüssigkeit innerhalb der Regenerationskolonne, wobei der erste Mengenstrom unmittelbar, d.h. ohne die Regenerationskolonne zu verlassen, in die zweite Regenerationsstufe geleitet wird und wobei der zweite Mengenstrom unterhalb der ersten Regenerationsstufe aus der ersten Regenerationskolonne abgezogen wird. Dazu kann insbesondere vorgesehen sein, dass die Waschflüssigkeit in der ersten Regenerationsstufe von einer Sammeleinrichtung aufgefangen wird, wobei der zweite Mengenstrom durchflussgeregelt über eine Pumpe von der Sammeleinrichtung abgezogen wird. Der Überschuss an Waschflüssigkeit staut sich auf und fließt über einen Überlauf, beispielsweise in Form eines Ablaufwehres, in einen unteren Kolonnenabschnitt mit der zweiten Regenerationsstufe.

Die Verteilung der Waschflüssigkeit kann dabei insbesondere über einen Rinnenverteiler erfolgen, der für kleine Durchsätze ausgelegt ist. Durch den Rinnenverteiler kann auch in der zweiten Regenerationsstufe eine relativ gleichmäßige Verteilung der Waschflüssigkeit erfolgen. Die weitere Reinigung des ersten Mengenstroms und die Bereitstellung als hoch abgetriebene Waschflüssigkeit erfolgt entsprechend der ersten Verfahrensvariante.

Die beschriebene zweite Verfahrensvariante zeichnet sich durch einen geringeren konstruktiven und apparativen Aufbau sowie eine geringere Kolonnenhöhe aus. Um ein Trockenlaufen der an die erste Regenerationsstufe angeschlossenen Pumpe zu vermeiden, weist diese zweckmäßigerweise eine Füllstandsabschaltung auf. Ein Fluten des unteren Kolonnenabschnittes im Falle einer Störung kann mit Hilfe einer Abschaltung einer Aufgabepumpe vermieden werden, mit der die Waschflüssigkeit in die erste Regenerationsstufe geleitet wird.

Wie bereits zuvor erläutert, kann als Waschflüssigkeit anstelle eines herkömmlichen Waschöls auf der Basis von Mineralöl oder Teeröl auch Biodiesel eingesetzt werden. Der Biodiesel wird aus Pflanzenölen gewonnen. Typische Ausgangsstoffe sind je nach den örtlichen Gegebenheiten beispielsweise Raps-, Palm-, Sonnenblumen- und Sojaöl, aus denen die entsprechenden Methylester gebildet werden. Im Rahmen der Erfindung ist im besonderen Maße Rapsölmethylester (RME) geeignet, welches in Regionen mit einem gemäßigten Klima in großen Mengen produziert werden kann und kommerziell verfügbar ist.

Die Zusammensetzung und die chemischen und physikalischen Eigenschaften von Biodiesel sind beispielsweise in den Normen DIN EN14214 (November 2003) und ASTM D 6751-07A beschrieben. Die genannten Normen beziehen sich auf den Einsatz von Biodiesel als Brennstoff. Vor diesem Hintergrund können für den Einsatz als Waschflüssigkeit zur Absorption von aromatischen Kohlenwasserstoffen auch zusätzlich zu den genormten Typen von Biodiesel Varianten von Biodiesel eingesetzt werden, die in einem gewissen Maße von den genannten Normen abweichen können.

Die Erfindung wird im Folgenden anhand einer lediglich ein Ausführungsbeispiel darstellenden Zeichnung erläutert. Es zeigen:
- Fig. 1: Eine schematische Darstellung einer Vorrichtung zur Entfernung von aromatischen Kohlenwasserstoffen, bei der eine Waschflüssigkeit im Kreislauf geführt wird,
- Fig. 2: die Detailansicht einer Regenerationskolonne gemäß der Fig. 1,
- Fig. 3: eine alternative Ausgestaltung der Regenerationskolonne.

Wesentlicher Bestandteil der Anlage zur Entfernung von aromatischen Kohlenwasserstoffen aus einem Kokereigas COG sind gemäß dem dargestellten Ausführungsbeispiel eine Gaswäscherkolonne 1 und eine Regenerationskolonne 2. Das Kokereigas COG wird durch eine Zuleitung in einem unteren Bereich der Gaswäscherkolonne 1 eingeleitet und durchströmt die Gaswäscherkolonne 1 in vertikaler Richtung, wobei es beispielsweise mit Biodiesel als Waschflüssigkeit in Kontakt gebracht wird, wodurch aromatische Kohlenwasserstoffe von der Waschflüssigkeit absorbiert und so von dem Kokereigas COG abgetrennt werden. Das gereinigte Kokereigas COG wird dann in einem oberen Bereich der Gaswäscherkolonne 1 durch eine Abführleitung abgeleitet.

Innerhalb der Gaswäscherkolonne sind eine erste Gaswäscherstufe 3 und darüber eine zweite Gaswäscherstufe 4 vorgesehen.

Von dem Boden der ersten Gaswäscherstufe 3, also von dem Boden der Gaswäscherkolonne 1, wird die mit aromatischen Kohlenwasserstoffen angereicherte Waschflüssigkeit abgezogen und der Regenerationskolonne 2 zugeführt.

Um in der ersten Gaswäscherstufe 3 eine effiziente Entfernung der aromatischen Kohlenwasserstoffe Benzol, Toluol, m-, p-, o-Xylol und Ehtylenbenzol (BTEX) zu ermöglichen, wird bei dem Biodiesel als Waschflüssigkeit vorzugsweise eine Temperatur leicht oberhalb der Gaseintrittstemperatur des Kokereigases COG eingestellt, um eine Kondensation des darin enthaltenen Wassers zu vermeiden. Die Temperatur bezieht sich dabei auf eine Teilmenge (zweite Teilmenge) des Biodiesels, der nach seiner Regeneration unmittelbar in die erste Gaswäscherstufe 3 eingebracht wird.

Um die aromatischen Kohlenwasserstoffe in der Regenerationskolonne 2 aus der Waschflüssigkeit abscheiden zu können, ist eine Temperaturerhöhung der Waschflüssigkeit vorgesehen, wozu die aus der ersten Gaswäscherstufe 3 abgezogene Waschflüssigkeit zunächst durch einen Wärmetauscher 5 und danach durch eine Heizeinrichtung 6 geführt wird. Zur Regelung der Temperatur und Mengenströme sind in dem Leitungssystem Sensoren für die Durchflusskontrolle DK und für die Temperaturkontrolle TK vorgesehen. Darüber hinaus können auch die Füllstände in der Regenerationskolonne 2 durch Sensoren einer Füllstandskontrolle FK überprüft werden.

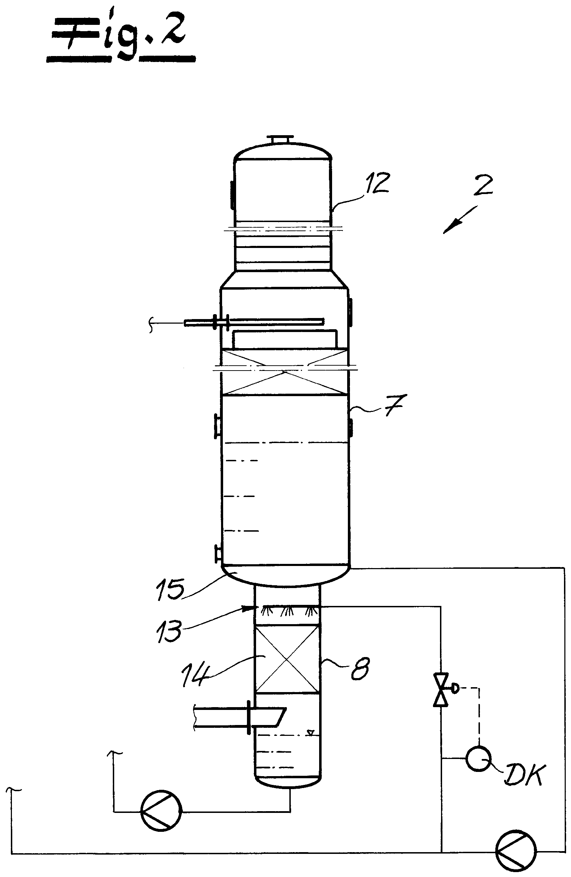

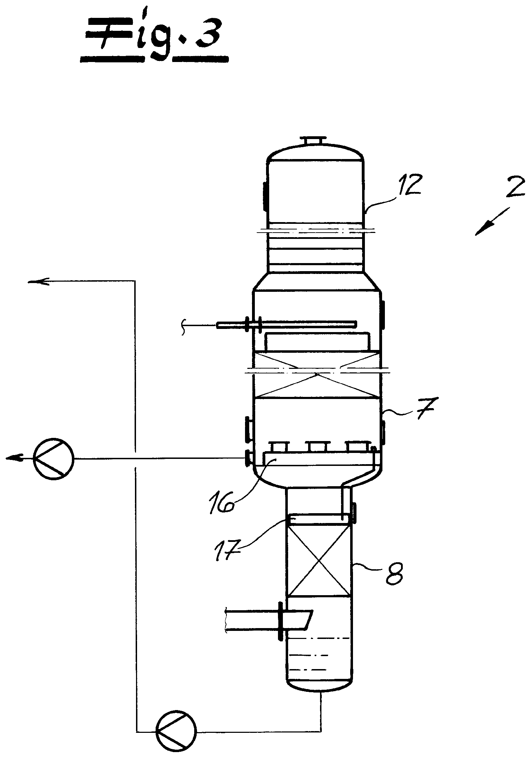

Die gesamte Waschflüssigkeit wird dann an einem mittleren Teil der Regenerationskolonne 2 in eine erste Regenerationsstufe 7 eingeleitet, wobei die Waschflüssigkeit in der ersten Regenerationsstufe 7 eine Temperatur von ca. 170 °C bis 190 °C aufweist. Der angegebene Temperaturbereich liegt oberhalb der Siedepunkte der BTEX-Komponenten, so das diese sich aus der Waschflüssigkeit lösen. Besonders effektiv ist ein Abtreiben des Rohbenzols mit Wasserdampf, insbesondere mit überhitztem Wasserdampf, der eine Temperatur von mehr als 150 °C aufweist. Besonders bevorzugt ist eine Stripp-Temperatur von etwa 180 °C bis 190 °C, wobei auch Biodiesel als Waschflüssigkeit bei einer solchen Temperatur nicht in einem nennenswerten Maße verdampft oder zersetzt wird.
Die in der ersten Regenerationsstufe 7 gereinigte Waschflüssigkeit wird nachfolgend in einen ersten Mengenstrom und in einen zweiten Mengenstrom aufgeteilt. In dem dargestellten Ausführungsbeispiel (vgl. Fig. 2) wird die Waschflüssigkeit am Boden der ersten Regenerationsstufe 7 ausgeschleust und außerhalb der Regenerationskolonne 2 in den ersten Mengenstrom und den zweiten Mengenstrom aufgeteilt, wobei der erste Mengenstrom zur weiteren Regeneration einer zweiten Regenerationsstufe 8 zugeführt wird, während der zweite Mengenstrom nach Einstellung einer geeigneten Temperatur mittels des Wärmetauschers 5 und eines Kühlers 9 wieder in die erste Gaswäscherstufe 3 zur Entfernung der BTEX-Komponenten eingeleitet wird.
In einer Abwandlung des dargestellten Ausführungsbeispiels kann am Boden der ersten Regenerationsstufe 7 auch eine Aufteilung in den ersten Mengenstrom und den zweiten Mengenstrom dadurch erfolgen, dass lediglich der zweite Mengenstrom aus der Regenerationskolonne 2 ausgeschleust wird, während der erste Mengenstrom zur weiteren Reinigung direkt in die zweite Regenerationsstufe 8 gelangt (vgl. Fig. 3).
Wie bereits zuvor erläutert, erfolgt die Regeneration durch Wasserdampf, der durch eine Wasserdampfzuführung 10 in einem unteren Bereich der Regenerationskolonne 2 in die zweite Regenerationsstufe 8 eingeleitet wird. Da der gesamte Wasserdampf nur mit dem ersten Mengenstrom der gesamten Waschflüssigkeit in Kontakt gebracht wird, dieser Anteil der Waschflüssigkeit bereits weitgehend gereinigt ist und der Wasserdampf noch seine ursprüngliche Temperatur aufweist, kann eine zusätzliche Reinigung der Waschflüssigkeit in der zweiten Regenerationsstufe 8 erreicht werden, wobei insbesondere Naphthalin effizient entfernt wird.

Vom Boden der zweiten Regenerationsstufe 8, also vom Boden der Regenerationskolonne 2, wird der stärker abgetriebene erste Mengenstrom der zweiten Gaswäscherstufe 4 zugeführt und mit einem Teilstrom der Waschflüssigkeit gemischt, der an der zweiten Gaswäscherstufe 4 in einem separaten Kreislauf 11 geführt wird.

Allerdings wird bei der zweiten Gaswäscherstufe 4 nur ein Teil der aufgegebenen Waschflüssigkeit aufgefangen und in einem Kreislauf geführt, während ein weiterer Teil in die darunter angeordnete erste Gaswäscherstufe 3 gelangt. Die Menge der von der zweiten Gaswäscherstufe 4 in die erste Gaswäscherstufe 1 überführten Waschflüssigkeit entspricht dabei der Teilmenge der regenerierten Waschflüssigkeit, die im stark abgetriebenen Zustand der zweiten Gaswäscherstufe 4 zugeführt wird.

Durch einen solchen offenen Kreislauf an der zweiten Gaswäscherstufe 4 wird durch die Abführung von angereicherter Waschflüssigkeit in die erste Gaswäscherstufe 3 und die entsprechende Zugabe von stark abgetriebener Waschflüssigkeit eine Aufkonzentration von Naphthalin vermieden.

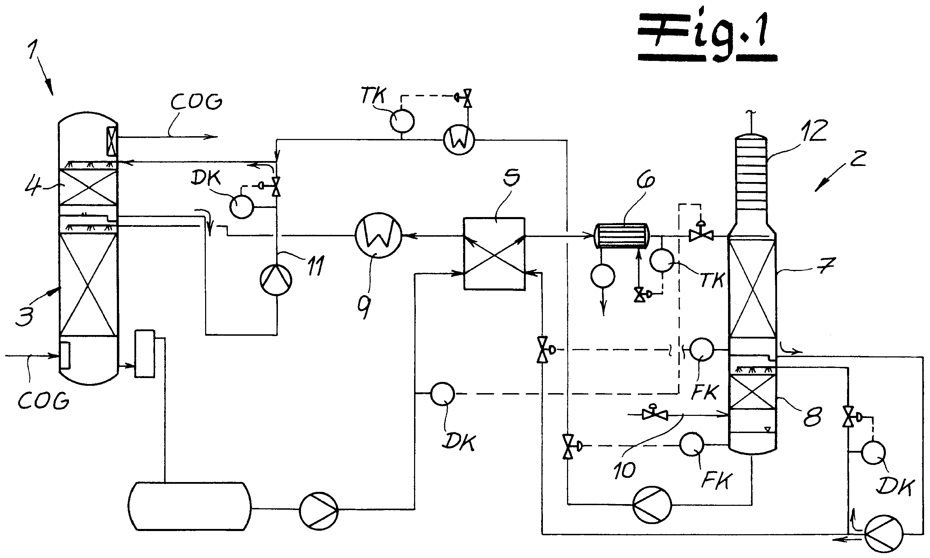

Die aus der Waschflüssigkeit abgetriebenen BTEX-Komponenten und das aus der Waschflüssigkeit abgetriebene Naphthalin verlassen die Regenerationskolonne 2 an ihrem Kopf und können in an sich bekannter Weise zurückgewonnen und genutzt werden. In der Fig. 1 ist dazu ein Rektifikationsteil 12 mit mehreren Böden dargestellt.

Durch die gegenüber dem Stand der Technik verbesserte Abscheidung von Naphthalin aus dem Kokereigas COG können störende Ablagerungen in dem nachgeordneten Leitungssystem verhindert werden.

Die Prozessparamater in der ersten Gaswäscherstufe 3 werden so eingestellt, dass die BTEX-Komponenten effektiv ausgewaschen werden können, während die Parameter in der zweiten Gaswäscherstufe 4 für die Entfernung von Naphthalin optimiert sind. Aufgrund der unterschiedlichen, insbesondere temperaturabhängigen Gleichgewichte wird für die Entfernung von Naphthalin in der zweiten Gaswäscherstufe 4 vorzugsweise eine höhere Temperatur der Waschflüssigkeit als in der ersten Gaswäscherstufe 3 eingestellt.

Selbstverständlich kann an einer geeigneten, nicht abgebildeten Stelle, auch während des Betriebs, ein (teilweiser) Austausch der Waschflüssigkeit oder ein Nachfüllen vorgesehen sein.

Die Fig. 2 zeigt eine Detailansicht einer Regenerationskolonne 2 gemäß der Fig. 1, bei der die Aufteilung in den ersten Mengenstrom und den zweiten Mengenstrom außerhalb der Regenerationskolonne 2 erfolgt. Da zunächst die gesamte Waschflüssigkeit abgezogen und mit einer Pumpe gefördert wird, kann der erste Mengenstrom mit einem Sprühverteiler 13 in die zweite Regenerationsstufe 8 eingesprüht werden, wodurch bezüglich einer Packung 14 innerhalb der zweiten Regenerationsstufe 8 eine besonders gleichmäßige Verteilung erreicht wird. Bei der Ausgestaltung gemäß der Fig. 2 ist am Boden der ersten Regenerationsstufe 7 ein Sumpf 15 vorgesehen, an dem die gesamte, in der ersten Regenerationsstufe 7 gereinigte Waschflüssigkeit zunächst aus der Regenerationskolonne 2 abgeführt wird.

Die Fig. 3 zeigt eine Variante der Regenerationskolonne 2, wobei die Aufteilung in den ersten Mengenstrom und den zweiten Mengenstrom innerhalb der Regenerationskolonne 2 erfolgt. Am Boden der ersten Regenerationsstufe ist eine Sammeleinrichtung 16 vorgesehen, die einen Überlauf aufweist. Während der zweite Mengenstrom von der Sammeleinrichtung 16 abgezogen wird, läuft der erste Mengenstrom über den Überlauf zu der zweiten Regenerationsstufe 8. Innerhalb der zweiten Regenerationsstufe 8 ist ein Rinnenverteiler 17 vorgesehen, der eine relativ gleichmäßige Verteilung der ersten Teilmenge der Waschflüssigkeit ermöglicht, auch wenn bei einer Ausgestaltung gemäß der Fig. 2 eine gleichmäßige Verteilung durch Versprühen möglich ist. Im Vergleich zu der Ausgestaltung gemäß der Fig. 2 ergibt sich jedoch ein vereinfachtes Leitungssystem, welches im Bereich der Regenerationskolonne ohne Abzweigungen auskommt. Darüber hinaus ergibt sich auch ein einfacheres, kompakteres Kolonnendesign.

## Patentansprüche

1. Verfahren zur Regeneration einer für eine Gaswäsche vorgesehenen und mit aromatischen Kohlenwasserstoffen angereicherten Waschflüssigkeit in einer Regenerationskolonne (2),
wobei die mit aromatischen Kohlenwasserstoffen angereicherte Waschflüssigkeit in einer ersten Regenerationsstufe (7) der Regenerationskolonne (2) mit Wasserdampf in Kontakt gebracht wird und die aromatischen Kohlenwasserstoffe dadurch teilweise aus der Waschflüssigkeit entfernt werden,
wobei die in der ersten Regenerationsstufe (7) gereinigte Waschflüssigkeit in einen ersten Mengenstrom und in einen zweiten Mengenstrom aufgeteilt wird,
wobei der zweite Mengenstrom als gereinigte Waschflüssigkeit für die Gaswäsche abgeführt wird,
wobei der erste Mengenstrom zur weiteren Regeneration einer zweiten Regenerationsstufe (8) der Regenerationskolonne (2) zugeführt wird, in der durch Kontakt mit Wasserdampf die Konzentration von aromatischen Kohlenwasserstoffen gegenüber der Konzentration in den zweiten Mengenstrom reduziert wird,
wobei ein Strom von Wasserdampf zunächst durch die zweite und nachfolgend durch die erste Regenerationsstufe (8, 7) geleitet wird und
wobei der erste Mengenstrom als stärker abgetriebene Waschflüssigkeit für die Gaswäsche abgeführt wird.

2. Verfahren nach Anspruch 1, wobei der zweite Mengenstrom größer als der erste Mengenstrom ist.

3. Verfahren nach Anspruch 1 oder 2, wobei die gesamte, in der ersten Regenerationsstufe (7) gereinigte Waschflüssigkeit in einem Sumpf (15) der ersten Regenerationsstufe (7) gesammelt, in ein Leitungssystem geleitet und in dem Leitungssystem in den ersten Mengenstrom und den zweiten Mengenstrom aufgeteilt wird.

4. Verfahren nach Anspruch 3, wobei die gesamte in der ersten Regenerationsstufe gereinigte Waschflüssigkeit mit dem Leitungssystem aus der Regenerationskolonne (2) abgezogen und außerhalb der Regenerationskolonne (2) in den ersten Mengenstrom und den zweiten Mengenstrom aufgeteilt wird.

5. Verfahren nach Anspruch 3 oder 4, wobei der erste Mengenstrom mit einer Pumpe gefördert und in die zweite Regenerationsstufe (8) eingesprüht wird.

6. Verfahren nach Anspruch 1 oder 2, wobei die in der ersten Regenerationsstufe (7) gereinigte Waschflüssigkeit innerhalb der Regenerationskolonne (2) in den ersten und den zweiten Mengenstrom aufgeteilt wird, wobei der erste Mengenstrom unmittelbar in die zweite Regenerationsstufe (8) geleitet wird und wobei der zweite Mengenstrom aus der Regenerationskolonne (2) abgezogen wird.

7. Verfahren nach Anspruch 6, wobei die Aufteilung in den ersten und den zweiten Mengenstrom an einem Überlauf eines Abzugsbodens oder eines Sumpfes der ersten Regenerationsstufe (7) erfolgt.

8. Verfahren nach Anspruch 6 oder 7, wobei der erste Mengenstrom über einen Rinnenverteiler (17) verteilt und in die zweite Regenerationsstufe (8) eingeleitet wird.

9. Verfahren nach einem der Ansprüche 1 bis 8, wobei Biodiesel als Waschflüssigkeit eingesetzt wird.

10. Verfahren nach einem der Ansprüche 1 bis 9, wobei der erste Mengenstrom einer ersten Gaswäscherstufe (3) zugeführt und mit einem aromatische Kohlenwasserstoffe enthaltenden Gas zur Abtrennung der aromatischen Kohlenwasserstoffe in Kontakt gebracht wird und wobei das in der ersten Gaswäscherstufe (3) gereinigte Gas einer zweiten Gaswäscherstufe (4) zugeführt wird, in der es zur weiteren Reinigung mit dem stärker abgetriebenen ersten Mengenstrom beaufschlagt wird.

11. Verfahren nach Anspruch 10, wobei an der zweiten Gaswäscherstufe (4) der erste Mengenstrom mit einem dort in einem Kreislauf (11) geführten dritten Mengenstrom gemischt und in die zweite Gaswäscherstufe (4) eingeleitet wird und wobei aus der zweiten Gaswäscherstufe (4) ein Strom an Waschflüssigkeit in die erste Gaswäscherstufe (3) überführt wird, der dem zugeführten ersten Mengenstrom entspricht.

12. Regenerationsanordnung zur Durchführung des Verfahren nach einem der Ansprüche 1 bis 11 mit einer Regenerationskolonne (2), die eine erste Regenerationsstufe (7) und eine unterhalb der ersten Regenerationsstufe (7) angeordnete zweite Regenerationsstufe (8) und einen Rektifikationsteil (12) oberhalb der ersten Regenerationsstufe (7) aufweist, mit einer im unteren Bereich der Regenerationskolonne (2) angeschlossenen Wasserdampfzuführung (10) und mit einem an eine Sammeleinrichtung der ersten Regenerationsstufe (7) angeschlossenen Leitungssystem für gereinigte Waschflüssigkeit, wobei die Sammeleinrichtung derart ausgebildet und angeordnet ist, dass diese ein Durchströmen von Wasserdampf von der zweiten in die erste Regenerationsstufe (8, 7) ermöglicht, wobei die Sammeleinrichtung als Sumpf (15) zum Auffangen der gesamten in der ersten Regenerationsstufe (7) gereinigten Waschflüssigkeit vorgesehen ist und wobei das Leitungssystem zumindest eine Pumpe und eine zu der zweiten Regenerationsstufe (8) führende Abzweigung aufweist.

13. Regenerationsanordnung zur Durchführung des Verfahren nach einem der Ansprüche 1 bis 11 mit einer Regenerationskolonne (2), die eine erste Regenerationsstufe (7) und einer unterhalb der ersten Regenerationsstufe (7) angeordnete zweite Regenerationsstufe (8) und einen Rektifikationsteil (12) oberhalb der ersten Regenerationsstufe (7) aufweist, mit einer im unteren Bereich der Regenerationskolonne (2) angeschlossenen Wasserdampfzuführung (10) und mit einem an eine Sammeleinrichtung (16) der ersten Regenerationsstufe (7) angeschlossenen Leitungssystem für gereinigte Waschflüssigkeit, wobei die Sammeleinrichtung (16) derart ausgebildet und angeordnet ist, dass diese ein Durchströmen von Wasserdampf von der zweiten in die erste Regenerationsstufe (8, 7) ermöglicht und am Boden der ersten Regenerationsstufe (7) eine Aufteilung der in der ersten Regenerationsstufe (7) gereinigten Waschflüssigkeit in einen ersten und einen zweiten Mengenstrom bewirkt, wobei lediglich der zweite Mengenstrom aus der Regenerationskolonne (2) ausgeschleust wird, während der erste Mengenstrom zur weiteren Reinigung direkt in die zweite Regenerationsstufe (8) gelangt.

## Claims

1. Process for regenerating a scrubbing liquid which is provided for a gas scrub and is enriched in aromatic hydrocarbons in a regeneration column (2), wherein
the scrubbing liquid enriched in aromatic hydrocarbons is brought into contact with steam in a first regeneration stage (7) of the regeneration column (2) and the aromatic hydrocarbons are thereby partly removed from the scrubbing liquid,
the scrubbing liquid purified in the first regeneration stage (7) is divided into a first stream and a second stream,
the second stream is discharged as purified scrubbing liquid for the gas scrub,
the first stream is, for the purpose of further regeneration, fed to a second regeneration stage (8) of the regeneration column (2) in which the concentration of aromatic hydrocarbons is reduced compared to the concentration in the second stream by contact with steam,
a stream of steam is firstly conveyed through the second regeneration stage and subsequently through the first regeneration stage (8, 7) and
the first stream is discharged as more highly stripped scrubbing liquid for the gas scrub.

2. Process according to Claim 1, wherein the second stream is larger than the first stream.

3. Process according to Claim 1 or 2, wherein the entire scrubbing liquid purified in the first regeneration stage (7) is collected in a bottom section (15) of the first regeneration stage (7), introduced into a line system and divided in the line system into the first stream and the second stream.

4. Process according to Claim 3, wherein the entire scrubbing liquid purified in the first regeneration stage is taken off by means of the line system from the regeneration column (2) and divided outside the regeneration column (2) into the first stream and the second stream.

5. Process according to Claim 3 or 4, wherein the first stream is conveyed by means of a pump and sprayed into the second regeneration stage (8).

6. Process according to Claim 1 or 2, wherein the scrubbing liquid purified in the first regeneration stage (7) is divided inside the regeneration column (2) into the first stream and the second stream, with the first stream being conveyed directly into the second regeneration stage (8) and the second stream being taken off from the regeneration column (2).

7. Process according to Claim 6, wherein the division into the first stream and the second stream is effected at an overflow of an offtake tray or a bottom section of the first regeneration stage (7).

8. Process according to Claim 6 or 7, wherein the first stream is distributed by means of a channel distributor (17) and introduced into the second regeneration stage (8).

9. Process according to any of Claims 1 to 8, wherein biodiesel is used as scrubbing liquid.

10. Process according to any of Claims 1 to 9, wherein the first stream is fed to a first gas scrubbing stage (3) and brought into contact with a gas containing aromatic hydrocarbons in order to separate off the aromatic hydrocarbons and the gas which has been purified in the first gas scrubbing stage (3) is fed to a second gas scrubbing stage (4) in which it is brought into the more highly stripped first stream to effect further purification.

11. Process according to Claim 10, wherein the first stream is mixed at the second gas scrubbing stage (4) with a third stream circulated (11) there and introduced into the second gas scrubbing stage (4) and a stream of scrubbing liquid which corresponds to the first stream fed in is transferred from the second gas scrubbing stage (4) into the first gas scrubbing stage (3) .

12. Regeneration arrangement for carrying out the process according to any of Claims 1 to 11, comprising a regeneration column (2) which has a first regeneration stage (7) and a second regeneration stage (8) arranged underneath the first regeneration stage (7) and a rectification section (12) above the first regeneration stage (7), a steam feed line (10) connected in the lower region of the regeneration column (2) and a line system for purified scrubbing liquid connected to a collection facility of the first regeneration stage (7), wherein the collection facility is configured and arranged in such a way that it allows steam to flow from the second regeneration stage to the first regeneration stage (8, 7), the collection facility is provided as a bottom section (15) for collecting the entire scrubbing liquid purified in the first regeneration stage (7) and the line system has at least one pump and a branch leading to the second regeneration stage (8).

13. Regeneration arrangement for carrying out the process according to any of Claims 1 to 11, comprising a regeneration column (2) which has a first regeneration stage (7) and a second regeneration stage (8) arranged underneath the first regeneration stage (7) and a rectification section (12) above the first regeneration stage (7), a steam feed line (10) connected in the lower region of the regeneration column (2) and a line system for purified scrubbing liquid connected to a collection facility (16) of the first regeneration stage (7), wherein the collection facility (16) is configured and arranged in such a way that it allows steam to flow from the second regeneration stage to the first regeneration stage (8, 7) and at the bottom of the first regeneration stage (7) effects division of the scrubbing liquid purified in the first regeneration stage (7) into a first and a second stream, with only the second stream being discharged from the regeneration column (2) while the first stream goes directly into the second regeneration stage (8) for further purification.

## Revendications

1. Procédé de régénération d'un liquide de lavage prévu pour un lavage de gaz et enrichi avec des hydrocarbures aromatiques dans une colonne de régénération (2),
dans lequel le liquide de lavage enrichi avec des hydrocarbures aromatiques est mis en contact dans une première étape de régénération (7) de la colonne de régénération (2) avec de la vapeur d'eau, et les hydrocarbures aromatiques sont ainsi partiellement éliminés du liquide de lavage,
dans lequel le liquide de lavage purifié dans la première étape de régénération (7) est divisé en un premier courant massique et en un deuxième courant massique,
dans lequel le deuxième courant massique est déchargé en tant que liquide de lavage purifié pour le lavage de gaz,
dans lequel le premier courant massique est introduit dans une deuxième étape de régénération (8) de la colonne de régénération (2) pour une régénération supplémentaire, dans laquelle, par mise en contact avec de la vapeur d'eau, la concentration en hydrocarbures aromatiques est réduite par rapport à la concentration dans le deuxième courant massique,
dans lequel un courant de vapeur d'eau est tout d'abord conduit dans la deuxième, puis dans la première étape de régénération (8, 7), et
dans lequel le premier courant massique est déchargé en tant que liquide de lavage plus fortement affiné pour le lavage de gaz.

2. Procédé selon la revendication 1, dans lequel le deuxième courant massique est plus grand que le premier courant massique.

3. Procédé selon la revendication 1 ou 2, dans lequel l'ensemble du liquide de lavage purifié dans la première étape de régénération (7) est collecté dans un fond (15) de la première étape de régénération (7), introduit dans un système de conduite et divisé dans le système de conduite en le premier courant massique et le deuxième courant massique.

4. Procédé selon la revendication 3, dans lequel l'ensemble du liquide de lavage purifié dans la première étape de régénération est soutiré de la colonne de régénération (2) avec le système de conduite, et divisé en dehors de la colonne de régénération (2) en le premier courant massique et le deuxième courant massique.

5. Procédé selon la revendication 3 ou 4, dans lequel le premier courant massique est transporté avec une pompe et injecté dans la deuxième étape de régénération (8).

6. Procédé selon la revendication 1 ou 2, dans lequel le liquide de lavage purifié dans la première étape de régénération (7) est divisé à l'intérieur de la colonne de régénération (2) en le premier et le deuxième courant massique, le premier courant massique étant introduit directement dans la deuxième étape de régénération (8) et le deuxième courant massique étant soutiré de la colonne de régénération (2).

7. Procédé selon la revendication 6, dans lequel la division en le premier et le deuxième courant massique a lieu au niveau d'un trop-plein d'un plateau de soutirage ou d'un fond de la première étape de régénération (7).

8. Procédé selon la revendication 6 ou 7, dans lequel le premier courant massique est réparti par un répartiteur à rainure (17) et introduit dans la deuxième étape de régénération (8).

9. Procédé selon l'une quelconque des revendications 1 à 8, dans lequel du biodiesel est utilisé en tant que liquide de lavage.

10. Procédé selon l'une quelconque des revendications 1 à 9, dans lequel le premier courant massique est introduit dans une première étape de lavage de gaz (3) et mis en contact avec un gaz contenant des hydrocarbures aromatiques pour la séparation des hydrocarbures aromatiques, et dans lequel le gaz purifié dans la première étape de lavage de gaz (3) est introduit dans une deuxième étape de lavage de gaz (4), dans laquelle il est chargé avec le premier courant massique plus fortement affiné pour une purification supplémentaire.

11. Procédé selon la revendication 10, dans lequel, au niveau de la deuxième étape de lavage de gaz (4), le premier courant massique est mélangé avec un troisième courant massique qui y est mis en circulation dans un circuit (11) et est introduit dans la deuxième étape de lavage de gaz (4), et dans lequel un courant de liquide de lavage est transféré depuis la deuxième étape de lavage de gaz (4) dans la première étape de lavage de gaz (3), qui correspond au premier courant massique introduit.

12. Agencement de régénération pour la réalisation du procédé selon l'une quelconque des revendications 1 à 11, comprenant une colonne de régénération (2), qui comprend une première étape de régénération (7) et une deuxième étape de régénération (8) agencée en dessous de la première étape de régénération (7), et une zone de rectification (12) au-dessus de la première étape de régénération (7), comprenant une conduite d'alimentation de vapeur d'eau (10) raccordée dans la zone inférieure de la colonne de régénération (2) et comprenant un système de conduite raccordé à un dispositif de collecte de la première étape de régénération (7) pour le liquide de lavage purifié, le dispositif de collecte étant configuré et agencé pour que celui-ci permette un passage de vapeur d'eau depuis la deuxième dans la première étape de régénération (8, 7), le dispositif de collecte étant prévu sous la forme d'un fond (15) pour capter l'ensemble du liquide de lavage purifié dans la première étape de régénération (7) et le système de conduite comprenant au moins une pompe et une dérivation conduisant vers la deuxième étape de régénération (8).

13. Agencement de régénération pour la réalisation du procédé selon l'une quelconque des revendications 1 à 11, comprenant une colonne de régénération (2), qui comprend une première étape de régénération (7) et une deuxième étape de régénération (8) agencée en dessous de la première étape de régénération (7), et une zone de rectification (12) au-dessus de la première étape de régénération (7), comprenant une conduite d'alimentation de vapeur d'eau (10) raccordée dans la zone inférieure de la colonne de régénération (2) et comprenant un système de conduite raccordé à un dispositif de collecte (16) de la première étape de régénération (7) pour le liquide de lavage purifié, le dispositif de collecte (16) étant configuré et agencé pour que celui-ci permette un passage de vapeur d'eau depuis la deuxième dans la première étape de régénération (8, 7) et réalise au fond de la première étape de régénération (7) une division du liquide de lavage purifié dans la première étape de régénération (7) en un premier et un deuxième courant massique, uniquement le deuxième courant massique étant évacué de la colonne de régénération (2), tandis que le premier courant massique atteint directement la deuxième étape de régénération (8) pour une purification supplémentaire.
